# EUROPEAN PATENT SPECIFICATION

(11) **EP 2 390 236 B1**
(45) Date of publication and mention of the grant of the patent: **02.04.2014**
(21) Application number: 09838594.1
(22) Date of filing: 23.01.2009
(51) Int. Cl.: C02F 3/00, C02F 1/469, B01D 61/00, B01D 61/44, B01D 61/46, C02F 3/34

(54) **SEWAGE TREATMENT PROCESS AND APPARATUS FOR GENERATING ELECTRIC CURRENT AND DESALTING SIMULTANEOUSLY**
ABWASSERBEHANDLUNGSVERFAHREN UND VORRICHTUNG ZUR GLEICHZEITIGEN ERZEUGUNG VON ELEKTRISCHEM STROM UND ENTSALZUNG
PROCÉDÉ DE TRAITEMENT DES EAUX USÉES ET APPAREIL DE GÉNÉRATION DE COURANT ÉLECTRIQUE ET DESSALAGE SIMULTANÉ

(43) Date of publication of application: 30.11.2011
(73) Proprietor: Tsinghua University, Beijing 100084 (CN)
(72) Inventor: HUANG, Xia, Beijing 100084 (CN); CAO, Xiaoxin, Beijing 100084 (CN); LIANG, Peng, Beijing 100084 (CN); XIAO, Kang, Beijing 100084 (CN); ZHOU, Yingjun, Beijing 100084 (CN); LOGAN, Bruce, University of Pennsylvania Park (US)
(74) Representative: Kudlek & Grunert Patentanwälte
(86) International application number: PCT/CN2009/000111
(87) International publication number: WO 2010/083627

(56) References cited:
- EP-A1- 1 742 288
- WO-A1-00/23382
- WO-A1-2011/159772
- WO-A2-2010/124079
- CN-A- 1 364 146
- CN-A- 1 874 040
- CN-A- 1 937 297
- CN-A- 101 227 008
- GB-A- 2 265 633
- US-A1- 2008 286 624
- XIAOXIN CAO ET AL: "A New Method for Water Desalination Using Microbial Desalination Cells", ENVIRONMENTAL SCIENCE & TECHNOLOGY, vol. 43, no. 18, 15 September 2009 (2009-09-15), pages 7148-7152, XP55035152, ISSN: 0013-936X, DOI: 10.1021/es901950j
- MAHA MEHANNA ET AL: "Using microbial desalination cells to reduce water salinity prior to reverse osmosis", ENERGY & ENVIRONMENTAL SCIENCE, vol. 3, no. 8, 1 January 2010 (2010-01-01) , page 1114, XP55035799, ISSN: 1754-5692, DOI: 10.1039/c002307h
- JACOBSON K S ET AL: "Efficient salt removal in a continuously operated upflow microbial desalination cell with an air cathode", BIORESOURCE TECHNOLOGY, ELSEVIER BV, GB, vol. 102, no. 1, 1 January 2011 (2011-01-01), pages 376-380, XP027368501, ISSN: 0960-8524 [retrieved on 2010-09-30]
- HONG, YIGUO ET AL.: 'Recent Progress in Electricigens and Microbial Fuel Cell' ACTA MICROBIOLOGICA SINICA. vol. 47, no. 1, 04 February 2007, ISSN 0001-6209 pages 173 - 177

## Description

### FIELD

The present disclosure generally relates to the field of water treatment, more particularly, to a wastewater treatment process and a wastewater treatment device for generating current and desalting simultaneously.

### BACKGROUND

The statements in this section merely provide background information related to the present disclosure and may or may not constitute prior art.

Water is an important natural resource for human survival. As global water environment deteriorates and energy crisis becomes serious, there is an urgent need for a wastewater recycling technology with high efficiency and low consumption to alleviate water shortage and meet the requirement for energy. Since 97% of all the water on earth is saline water comprising sea water and brackish water, fresh water is acquired by desalting saline water from the sea and salina to alleviate increasingly serious worldwide water crisis, which has been not only a consensus in global scientific communities but also a government assertion of every country with sea coasts and a countermeasure of developing new water sources. At present, sea water desalination has been all over 125 countries and regions in the world, and desalinized water supports about 5% of the population in the world. Main desalination processes comprise a distillation method, an electrodialysis method, an ultrafiltration-reverse osmosis method, etc. These processes have high treatment efficiencies whereas the power consumption thereof is high.

A microbial fuel cell (MFC) is a novel wastewater treatment technology developed recently, and a conventional microbial fuel cell consists of an anode, a barrier and a cathode. The basic principle of the MFC lies in the fact that under the action of electricigenic microbes, contaminants are removed by anode oxidizing, and the chemical energy thereof is converted into electric energy, thus generating current while treating wastewater. From 2002 to the present, the output power of MFC has been increased by nearly ten thousand times, which shows a bright perspective in application. A conventional research approach to the MFC is to utilize a current in an external circuit. However, there is an identical internal current in an internal circuit. By virtue of electrodialysis principle, a cation exchange membrane and an anion exchange membrane are used instead of a single cation exchange membrane to form a middle compartment, and saline water is introduced into the middle compartment, so that the internal current of MFC may be utilized so as to treat wastewater, generate current and desalt simultaneously.
UK Patent Application GB 2 265 633A discloses a multicompartment electrodialyzer for desalting aqueous solutions, comprising a container having an input for supplying aqueous solution to be desalinated and an output for carrying substantially desalinated solution out of the container, at least one membrane adapted to provide an anion exchange, at least one membrane adapted to provide a cation exchange, a flow path from the input to the output across a surface of each of the membranes successively, and a concentration chamber separated from successive portions of the flow path by an anion exchange membrane, and subsequently in the flow path by a cation exchange membrane, and means for drawing off fluid accumulating in the concentration chamber. However, the desalting process of this prior art is substantially electrolysis process.
European Patent Application EP 1 742 288 Al discloses a microbial fuel for oxidation of electron donors, comprising an anode able to accept electrons and to transfer them to an external circuit, and able to sustain microorganisms; a cathode able to transfer electrons from the external circuit to an electron acceptor or sink; and a membrane separating the cathode from the anode. However, this prior art cannot utilize anion exchange membrane and cation exchange membrane simultaneously for desalting and current generating simultaneously.

### SUMMARY

According to the present invention, a wastewater treatment process and a corresponding device as specified in the independent claims is provided. The present disclosure is therefore directed to use MFC to treat wastewater, generate current and desalt simultaneously based on a microbial fuel cell technology.

According to an aspect of the present disclosure, a wastewater treatment process for generating current and desalting simultaneously is provided, comprising steps of: (a) providing a device; (b) oxidizing wastewater flowing into an anode compartment A under the action of electricigenic microbes to remove contaminants from the wastewater, transferring electrons in a respiratory chain of the electricigenic microbes to an anode 4, and a current in an external circuit flowing from a cathode 5 to the anode 4; (c) a current in an internal circuit flowing from the anode 4 to the cathode 5, saline water continuously flowing into a middle desalting compartment B, and due to the selectivity of an anion exchange membrane 2 and a cation exchange membrane 3, transferring anions and cations to the anode compartment A and a cathode compartment C through the anion exchange membrane 2 and the cation exchange membrane 3 under the action of an electric driving force respectively to achieve a desalting process; and (d) combining electrons in the external circuit transferred to the cathode 5 with an electron acceptor to complete a reduction reaction, thus achieving current generation.

In some embodiments, the wastewater is organic wastewater capable of being treated biochemically.

In some embodiments, the electricigenic microbe may comprise Geobacter and Shewanella.

In some embodiments, the saline water comprises: sea water or brackish water with a salt content of 5-35 g/L.

In some embodiments, the electron acceptor comprises oxygen and potassium ferricyanide for chemically catalytic reduction as well as oxygen, nitrate and carbon dioxide for microbially catalytic reduction.

According to another aspect of the present disclosure, a wastewater treatment device for generating current and desalting simultaneously is provided, in which a microbial fuel cell 1 is divided into an anode compartment A, a middle desalting compartment B and a cathode compartment C by an anion exchange membrane 2 and a cation exchange membrane 3; and an anode 4 is disposed in the anode compartment A, a cathode 5 is disposed in the cathode compartment C, and an electricigenic biofilm 6 is disposed on the anode 4.

In some embodiments, the anion exchange membrane 2 and the cation exchange membrane 3 are a non-toxic industrial electrodialysis ion exchange membrane with a transmissivity not less than 90%, a thickness of 0.2-0.5 mm, and a bursting strength not less than 0.3 MPa.

In some embodiments, the electricigenic biofilm 6 on the anode 4 has a thickness of 20-80 µm.

In some embodiments, the anode 4 and a filling material in the anode compartment A comprise graphite particles or carbon felt with a particle diameter of 1-5 mm.

In some embodiments, the cathode 5 and a filling material in the cathode compartment C comprise graphite particles or carbon felt with a particle diameter of 1-5 mm.

With the wastewater treatment process and the wastewater treatment device according to an embodiment of the present disclosure, the internal current of the microbial fuel cell (MFC) is utilized to treat wastewater, generate current and desalt simultaneously. The wastewater treatment process according to an embodiment of the present disclosure is simple, easy to operate with low energy consumption and high efficiency. The wastewater treatment device according to an embodiment of the present disclosure is simple in structure and convenient for production and application in related industry.

### BRIEF DESCRIPTION OF THE DRAWINGS

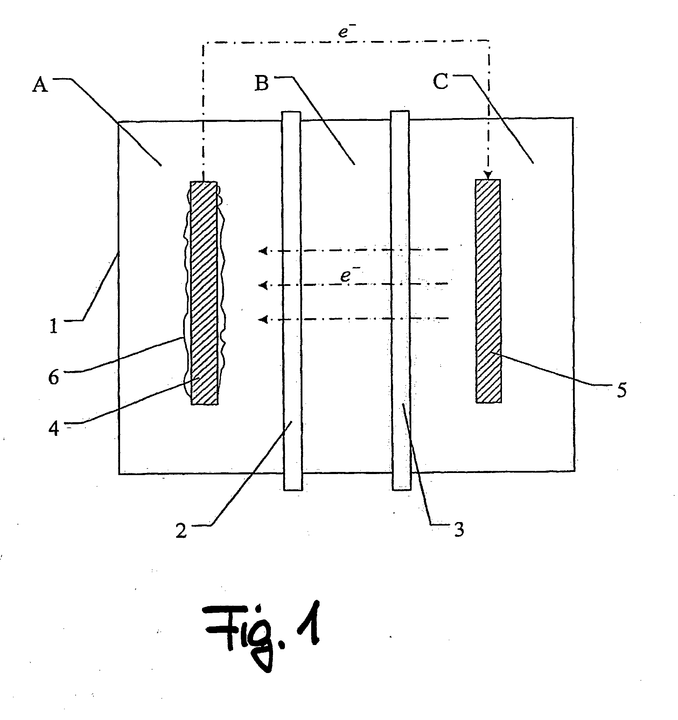

Fig. 1 is a schematic view showing a principle of a microbial desalination cell according to an embodiment of the present disclosure.

Reference signs: 1-microbial fuel cell; 2-anion exchange membrane; 3-cation exchange membrane; 4-anode; 5-cathode; 6-electricigenic biofilm.

### DETAILED DESCRIPTION

A wastewater treatment process and a wastewater treatment device for generating current and desalting simultaneously are provided. Reference will be made in detail to embodiments of the present disclosure.

Fig. 1 is a schematic view showing a principle of a microbial desalination cell according to an embodiment of the present disclosure. A microbial fuel cell 1 is divided into an anode compartment A, a middle desalting compartment B and a cathode compartment C by an anion exchange membrane 2 and a cation exchange membrane 3. The anion exchange membrane 2 and the cation exchange membrane 3 are non-toxic industrial electrodialysis ion exchange membranes with a transmissivity of 95%, a thickness of 0.3 mm, and a bursting strength of 0.5 MPa. An anode 4 is disposed in the anode compartment A, a cathode 5 is disposed in the cathode compartment C, and an electricigenic biofilm 6 with a thickness of 40 µm is disposed on the anode 4. The electricigenic microbe is Geobacter. Each of the anode 4, the cathode 5, and filling materials in the anode compartment A and the cathode compartment B is carbon felt with a particle diameter of 1-5 mm. The filling materials of the anode compartment A and the cathode compartment B may increase the adhesion area of the electricigenic microbe and the cathode area, thus increasing the current accordingly.

After the device for generating current and desalting simultaneously is provided, the anode compartment A is kept under anaerobic conditions, organic wastewater capable of being treated biochemically flows into the anode compartment A, and is oxidized under the action of the electricigenic microbes to remove contaminants from the wastewater, electrons in a respiratory chain of the electricigenic microbes are transferred to the anode 4, and a current in an external circuit flows from the cathode 5 to the anode 4. A current in an internal circuit flows from the anode 4 to the cathode 5, sea water with a salt content of 20 g/L continuously flows into the middle desalting compartment B, and due to the selectivity of the anion exchange membrane 2 and the cation exchange membrane 3, anions and cations are transferred to the anode compartment A and the cathode compartment C through the anion exchange membrane 2 and the cation exchange membrane 3 under the action of an electric driving force respectively to achieve a desalting process. Electrons in the external circuit transferred to the cathode 5 are combined with an electron acceptor such that a reduction reaction may take place and a current generation may be accomplished.

At present, with the MFC according to an embodiment of the present disclosure, an output power is about 300 W/m³, a wastewater treatment load is 5 kg/m³d, a running current is about 100 mA, and a desalination rate is 90 mM/d. With the development of the MFC technology, the increase of the current will continuously increase the desalination rate.

## Claims

1. A wastewater treatment process for generating current and desalting simultaneously, comprising steps of:
(a) providing a device comprising
a microbial fuel cell (1) which is divided into an anode compartment (A), a middle desalting compartment (B) and a cathode compartment (C) by an anion exchange membrane (2) and a cation exchange membrane (3) respectively provided therein;
an anode (4) disposed in the anode compartment (A) with an electricigenic biofilm (6) disposed on the anode (4);
a cathode (5) disposed in the cathode compartment (C); and an external circuit connecting the cathode (5) and the anode (4) ;
(b) oxidizing wastewater flowing into the anode compartment (A) under the action of electricigenic microbes to remove contaminants from the wastewater, transferring electrons in a respiratory chain of the electricigenic microbes to the anode (4) via an external circuit with a current therein flowing from the cathode (5) to the anode (4);
(c) continuously supplying saline water into the middle desalting compartment (B) with a current in an internal circuit connecting the cathode (5) and the anode (4) inside the microbial fuel cell (1) flowing from the anode (4) to the cathode (5), and due to the selectivity of an anion exchange membrane (2) and a cation exchange membrane (3), anions and cations in the microbial fuel cell (1) being transferred to the anode compartment (A) and the cathode compartment (C) through the anion exchange membrane (2) and the cation exchange membrane (3) under the action of an electromotive force respectively for desalting; and
(d) combining electrons in the external circuit transferring to the cathode (5) with an electron acceptor to undertake a reduction reaction for generating electricity.

2. The wastewater treatment process according to claim 1, wherein the wastewater is organic wastewater capable of being treated biochemically.

3. The wastewater treatment process according to claim 1, wherein the electricigenic microbe comprise Geobacter and Shewanella.

4. The wastewater treatment process according to claim 1, wherein the saline water comprises: sea water or brackish water with a salt content of 5-35 g/L.

5. The wastewater treatment process according to claim 1, wherein the electron acceptor comprises oxygen and potassium ferricyanide for chemically catalytic reduction as well as oxygen, nitrate and carbon dioxide for microbially catalytic reduction.

6. A wastewater treatment device for generating current and desalting simultaneously, comprising:
a microbial fuel cell (1) being divided into an anode compartment (A), a middle desalting compartment (B) and a cathode compartment (C) by an anion exchange membrane (2) and a cation exchange membrane (3) provided therein;
an anode (4) disposed in the anode compartment (A) with an electricigenic biofilm (6) disposed on the anode (4);
a cathode (5) disposed in the cathode compartment (C) with an electron acceptor; and
an external circuit connecting the cathode (5) and the anode (4), wherein wastewater is supplied into the anode compartment (A) whereas saline water is continuously flowing into the middle desalting compartment (B).

7. The wastewater treatment device according to claim 6, wherein the anion exchange membrane (2) and the cation exchange membrane (3) are a non-toxic industrial electrodialysis ion exchange membrane with a transmissivity not less than 90%, a thickness of 0.2-0.5 mm, and a bursting strength not less than 0.3 MPa.

8. The wastewater treatment device according to claim 6, wherein the electricigenic biofilm (6) on the anode (4) has a thickness of 20-80 µm.

9. The wastewater treatment device according to claim 6, wherein the anode (4) and a filling material in the anode compartment (A) comprise graphite particles, carbon felt or coke with a particle diameter of 1-5 mm.

10. The wastewater treatment device according to claim 6, wherein the cathode (5) and a filling material in the cathode compartment (C) comprise graphite particles, carbon felt or coke with a particle diameter of 1-5mm.

11. The wastewater treatment device according to claim 6, wherein the electricigenic microbe comprise Geobacter and/or Shewanella.

12. The wastewater treatment device according to claim 6, wherein the electron acceptor comprises oxygen and potassium ferricyanide for chemically catalytic reduction as well as oxygen, nitrate and carbon dioxide for microbially catalytic reduction.

## Patentansprüche

1. Abwasseraufbereitungsprozess zum gleichzeitigen Erzeugen von Strom und Entsalzen, der die Schritte umfasst:
(a) Bereitstellen einer Vorrichtung, die enthält:
eine mikrobielle Brennstoffzelle (1), die durch eine Anionenaustauschermembran (2) und eine Kationenaustauschermembran (3), die jeweils darin vorgesehen sind, in einen Anodenraum (A), einen mittleren Entsalzungsraum (B) und einen Kathodenraum (C) unterteilt ist;
eine Anode (4), die in dem Anodenraum (A) angeordnet ist, wobei ein elektrogener Biofilm (6) auf der Anode (4) angeordnet ist;
eine Kathode (5), die in dem Kathodenraum (C) angeordnet ist; und
eine externe Schaltung, die die Kathode (5) und die Anode (4) verbindet;
(b) Oxidieren des in den Anodenraum (A) strömenden Abwassers unter der Einwirkung von elektrogenen Mikroben, um Verunreinigungen aus dem Abwasser zu entfernen, wobei Elektronen in einer Atmungskette der elektrogenen Mikroben über eine externe Schaltung zu der Anode (4) übertragen werden, wobei darin ein Strom von der Kathode (5) zu der Anode (4) fließt;
(c) fortlaufendes Zuführen von Salzwasser in den mittleren Entsalzungsraum (B), wobei ein Strom in einer internen Schaltung, die die Kathode (5) und die Anode (4) innerhalb der mikrobiellen Brennstoffzelle (1) verbindet, von der Anode (4) zu der Kathode (5) fließt, und aufgrund der Selektivität einer Anionenaustauschermembran (2) und einer Kationenaustauschermembran (3), Anionen und Kationen in der mikrobiellen Brennstoffzelle (1) durch die Anionenaustauschermembran (2) und die Kationenaustauschermembran (3) unter der Einwirkung einer elektromotorischen Kraft für die Entsalzung jeweils zu dem Anodenraum (A) und dem Kathodenraum (C) übertragen werden; und
(d) Kombinieren der in der externen Schaltung zu der Kathode übertragenen Elektronen mit einem Elektronakzeptor, um eine Reduktionsreaktion zum Erzeugen von Elektrizität auszuführen.

2. Abwasseraufbereitungsprozess nach Anspruch 1, wobei das Abwasser organisches Abwasser ist, das biochemisch aufbereitet werden kann.

3. Abwasseraufbereitungsprozess nach Anspruch 1, wobei die elektrogenen Mikroben Geobacter und Shewanella enthalten.

4. Abwasseraufbereitungsprozess nach Anspruch 1, wobei das Salzwasser enthält: Meerwasser oder Brackwasser mit einem Salzgehalt von 5-35 g/l.

5. Abwasseraufbereitungsprozess nach Anspruch 1, wobei der Elektronenakzeptor sowohl Sauerstoff und rotes Blutlaugensalz für eine chemische katalytische Reduktion als auch Sauerstoff, Nitrat und Kohlendioxid für eine mikrobielle katalytische Reduktion enthält.

6. Abwasseraufbereitungseinrichtung zum gleichzeitigen Erzeugen von Strom und Entsalzen, die umfasst:
eine mikrobielle Brennstoffzelle (1), die durch eine Anionenaustauschermembran (2) und eine Kationenaustauschermembran (3), die jeweils darin vorgesehen sind, in einen Anodenraum (A), einen mittleren Entsalzungsraum (B) und einen Kathodenraum (C) unterteilt ist;
eine Anode (4), die in dem Anodenraum (A) angeordnet ist, wobei ein elektrogener Biofilm (6) auf der Anode (4) angeordnet ist;
eine Kathode (5), die in dem Kathodenraum (C) mit einem Elektronenakzeptor angeordnet ist; und
eine externe Schaltung, die die Kathode (5) und die Anode (4) verbindet, wobei Abwasser dem Anodenraum (A) zugeführt wird, während fortlaufend Salzwasser in den mittleren Entsalzungsraum (B) strömt.

7. Abwasseraufbereitungseinrichtung nach Anspruch 6, wobei die Anionenaustauschermembran (2) und die Kationenaustauschermembran (3) eine ungiftige industrielle Elektrodialyseionenaustaschermembran mit einer Durchlässigkeit von nicht weniger als 90 %, einer Dicke von 0,2-0,5 mm und einer Berstfestigkeit von nicht weniger als 0,3 MPa sind.

8. Abwasseraufbereitungseinrichtung nach Anspruch 6, wobei der elektrogene Biofilm (6) auf der Anode (4) eine Dicke von 20-80 µm aufweist.

9. Abwasseraufbereitungseinrichtung nach Anspruch 6, wobei die Anode (4) und ein Füllmaterial in dem Anodenraum (A) Graphitteilchen, Kohlenstofffilz oder Koks mit einem Teilchendurchmesser von 1-5 mm enthalten.

10. Abwasseraufbereitungseinrichtung nach Anspruch 6, wobei die Kathode (5) und ein Füllmaterial in dem Kathodenraum (C) Graphitteilchen, Kohlenstofffilz oder Koks mit einem Teilchendurchmesser von 1-5 mm enthalten.

11. Abwasseraufbereitungseinrichtung nach Anspruch 6, wobei die elektrogenen Mikroben Geobacter und/oder Shewanella enthalten.

12. Abwasseraufbereitungseinrichtung nach Anspruch 6, wobei der Elektronenakzeptor sowohl Sauerstoff und rotes Blutlaugensalz für eine chemische katalytische Reduktion als auch Sauerstoff, Nitrat und Kohlendioxid für eine mikrobielle katalytische Reduktion enthält.

## Revendications

1. Procédé de traitement d'eaux usées pour générer du courant et effectuer simultanément un dessalement, comportant les étapes consistant à :
(a) fournir un dispositif comportant
une pile à combustible microbienne (1) qui est divisée en un compartiment d'anode (A), un compartiment de dessalement central (B) et un compartiment de cathode (C) par une membrane d'échange anionique (2) et une membrane d'échange cationique (3) respectivement agencées à l'intérieur de ceux-ci ;
une anode (4) disposée dans le compartiment d'anode (A) avec un biofilm électricigène (6) disposé sur l'anode (4) ;
une cathode (5) disposée dans le compartiment de cathode (C) ; et
un circuit externe reliant la cathode (5) et l'anode (4) ;
(b) oxyder des eaux usées s'écoulant dans le compartiment d'anode (A) sous l'action de microbes électricigènes pour retirer les contaminants des eaux usées, transférer des électrons dans une chaîne respiratoire des microbes électricigènes vers l'anode (4) via un circuit externe avec un courant dans celui-ci circulant de la cathode (5) à l'anode (4) ;
(c) fournir en continu de l'eau saline dans le compartiment de dessalement central (B) avec un courant dans un circuit interne reliant la cathode (5) et l'anode (4) à l'intérieur de la pile à combustible microbienne (1) circulant de l'anode (4) à la cathode (5), et du fait de la sélectivité d'une membrane d'échange anionique (2) et d'une membrane d'échange cationique (3), les anions et les cations dans la pile à combustible microbienne (1) étant transférés vers le compartiment d'anode (A) et le compartiment de cathode (C) à travers la membrane d'échange anionique (2) et la membrane d'échange cationique (3) sous l'action d'une force électromotrice respectivement pour le dessalement ; et
(d) combiner des électrons dans le circuit externe en cours de transfert vers la cathode (5) avec un accepteur d'électrons pour entreprendre une réaction de réduction destinée à produire de l'électricité.

2. Procédé de traitement d'eaux usées selon la revendication 1, dans lequel les eaux usées sont des eaux usées organiques pouvant être traitées par voie biochimique.

3. Procédé de traitement d'eaux usées selon la revendication 1, dans lequel le microbe électricigène inclut Geobacter et Shewanella.

4. Procédé de traitement d'eaux usées selon la revendication 1, dans lequel l'eau saline comporte : de l'eau de mer ou de l'eau saumâtre avec une teneur en sel de 5 à 35 g/l.

5. Procédé de traitement d'eaux usées selon la revendication 1, dans lequel l'accepteur d'électrons comporte l'oxygène et le ferricyanure de potassium pour la réduction catalytique par voie chimique, ainsi que l'oxygène, des nitrates et le dioxyde de carbone pour la réduction catalytique par voie microbienne.

6. Dispositif de traitement d'eaux usées pour générer du courant et effectuer simultanément un dessalement, comportant :
une pile à combustible microbienne (1) étant divisée en un compartiment d'anode (A), un compartiment de dessalement central (B) et un compartiment de cathode (C) par une membrane d'échange anionique (2) et une membrane d'échange cationique (3) agencées à l'intérieur de ceux-ci ;
une anode (4) disposée dans le compartiment d'anode (A) avec un biofilm électricigène (6) disposé sur l'anode (4) ;
une cathode (5) disposée dans le compartiment de cathode (C) avec un accepteur d'électrons ; et
un circuit externe reliant la cathode (5) et l'anode (4), dans lequel les eaux usées sont délivrées dans le compartiment d'anode (A) alors que l'eau saline s'écoule de manière continue dans le compartiment de dessalement central (B).

7. Dispositif de traitement d'eaux usées selon la revendication 6, dans lequel la membrane d'échange anionique (2) et la membrane d'échange cationique (3) sont une membrane d'échange ionique par électrodialyse industrielle non toxique avec une transmissivité non inférieure à 90 %, une épaisseur de 0,2 à 0,5 mm, et une résistance à l'éclatement non inférieure à 0,3 MPa.

8. Dispositif de traitement d'eaux usées selon la revendication 6, dans lequel le biofilm électricigène (6) sur l'anode (4) a une épaisseur de 20 à 80 µm.

9. Dispositif de traitement d'eaux usées selon la revendication 6, dans lequel l'anode (4) et un matériau de remplissage dans le compartiment d'anode (A) comportent des particules de graphite, du feutre de carbone ou du coke avec un diamètre de particules de 1 à 5 mm.

10. Dispositif de traitement d'eaux usées selon la revendication 6, dans lequel la cathode (5) et un matériau de remplissage dans le compartiment de cathode (C) comportent des particules de graphite, du feutre de carbone ou du coke avec un diamètre de particules de 1 à 5 mm.

11. Dispositif de traitement d'eaux usées selon la revendication 6, dans lequel le microbe électricigène inclut Geobacter et/ou Shewanella.

12. Dispositif de traitement d'eaux usées selon la revendication 6, dans lequel l'accepteur d'électrons comporte l'oxygène et le ferricyanure de potassium pour la réaction catalytique par voie chimique, ainsi que l'oxygène, des nitrates et du dioxyde de carbone pour la réduction catalytique par voie microbienne.
